# EUROPEAN PATENT APPLICATION

(11) **EP 4 250 088 A1**
(43) Date of publication of application: **27.09.2023**
(21) Application number: 21913828.6
(22) Date of filing: 09.12.2021
(51) Int. Cl.: G06F 3/14

(54) **SCREEN PROJECTION METHOD AND ELECTRONIC DEVICE**

(30) Priority: 31.12.2020 CN 202011642279
(71) Applicant: Huawei Technologies Co., Ltd., Shenzhen, Guangdong 518129 (CN)
(72) Inventor: YI, Hui, Shenzhen, Guangdong 518129 (CN); ZHU, Dengkui, Shenzhen, Guangdong 518129 (CN); CHEN, Xiaoxiao, Shenzhen, Guangdong 518129 (CN)
(74) Representative: Maiwald GmbH
(86) International application number: PCT/CN2021/136848
(87) International publication number: WO 2022/143087

(57) **Abstract**

This application provides a screen projection method and an electronic device, and relates to the field of terminal technologies. The method includes: A first device obtains first content to display corresponding to a first process of a first application program; the first device determines a second device based on a first user identifier corresponding to the first process; and the first device projects the first content to display to a display device of the second device for display. According to the technical solution provided in this application, security of screen projection display can be improved.

## Description

This application claims priority to Chinese Patent Application No. 202011642279. 5, filed with the China National Intellectual Property Administration on December 31, 2020 and entitled "SCREEN PROJECTION METHOD AND ELECTRONIC DEVICE", which is incorporated herein by reference in its entirety.

### TECHNICAL FIELD

This application relates to the field of terminal technologies, and in particular, to a screen projection method and an electronic device.

### BACKGROUND

Currently, an electronic device may install and run an application program. The electronic device may obtain content to display of the application program, and display the content on a local display. However, this simple display mode can hardly meet needs of users. Therefore, various display modes that are more diversified emerge, and screen projection is an important display mode.

In a conventional technology, a first device may obtain content to display corresponding to a process of an application program, and the first device may display the content to display, or the first device may project the content to display to a second device, so that the content to display is displayed on a display device of the second device.

However, a user of the first device may be different from a user watching the display device of the second device. For example, the first device may be a mobile phone of a user, and the second device may be a public display device in a conference room of a company. Therefore, the user of the first device usually does not want the user watching the second device to see some private content through the second device. However, in an existing screen projection mode, content that can be displayed by the first device and the second device is the same. As result, privacy of the user of the first device may be leaked, and security is low.

### SUMMARY

In view of this, this application provides a screen projection method and an electronic device, to improve security of screen projection display.

To achieve the foregoing objective, according to a first aspect, an embodiment of this application provides a screen projection method, including:
A first device obtains first content to display corresponding to a first process of a first application program;
the first device determines a second device based on a first user identifier corresponding to the first process; and
the first device projects the first content to display to a display device of the second device for display.

The first application program may be any application program in the first device. In some embodiments, the first application program may include a system application program. The system application program is used to provide a software environment that is necessary for an electronic device to run or interact with a user, for example, a launcher application and a system user interface application. In some other embodiments, the first application program may include a user application program, and the user application program may be installed by a user and provide a value-added service such as a communication application and a game, for the user.

It should be noted that the user identifier in this embodiment may be a user identifier in an operating system of the electronic device.

In this embodiment of this application, the first device may obtain the first content to display corresponding to the first process of the first application program, and determine the second device based on the first user identifier corresponding to the first process. Because the first process is corresponding to the first user identifier, and the second device is determined based on the first user identifier, the first content to display of the first process may be projected to the second device for display, that is, the first device can use the first user identifier to control content displayed on the second device. This resolves a problem of projecting all displayed content of the first application program to the second device without distinction, and improves display security.

Optionally, the method further includes:
The first device obtains second content to display corresponding to a second process of the first application program, where the second process corresponds to a second user identifier, and the second user identifier corresponds to the first device; and
the first device displays the second content to display on a display device of the first device.

For example, the first user identifier may be represented as userid = 10, that is, user 10; and the second user identifier may be represented as userid = 0, that is, user 0.

A user may control, through a plurality of user identifiers, content to display on a plurality of different devices. Therefore, display flexibility and security are improved. In addition, when running the first application program, the first device displays the first content to display corresponding to the first process of the first application program on the second device, and displays the second content to display corresponding to the second process of the first application program on the first device or the third device. The first process and the second process are independent of each other. In this case, the first device may adapt the first content to display and the second content to display to display devices of the second device and the first device (or the third device), so that the first content to display and the second content to display are respectively displayed in the second device and the first device (or the third device). For a user, the first application program can be simultaneously displayed in two devices. Therefore, display performance and user experience are improved.

Optionally, the first user identifier is the same as the second user identifier, the first process and the second process are a same process, and the first content to display is the same as the second content to display.

The first device may compare the first user identifier with the second identifier. When the first user identifier is different from the second user identifier, it may be determined that current screen projection is different source screen projection. When the first user identifier is the same as the second user identifier, current screen projection is same source screen projection, and the first process and the second process are a same process. In this case, the first content to display is the same as the second content to display.

Optionally, that the first device determines a second device based on a first user identifier corresponding to the first process includes:
The first device determines, based on the first user identifier, a device identifier of the second device from a stored correspondence between at least one user identifier and at least one device identifier, where the at least one user identifier includes the first user identifier, and the at least one device identifier includes the device identifier of the second device; and
the first device determines the second device based on the device identifier of the second device.

It should be noted that the correspondence between the user identifier and the device identifier may be determined by the first device in advance. In some embodiments, the first device may first determine the second device for projection display, determine the first user identifier corresponding to the second device, and then store the device identifier of the second device corresponding to the first user identifier, so that when the first content to display of the first process corresponding to the first user identifier is obtained, the corresponding second device may be determined based on the first user identifier.

In some embodiments, the first device may search for the second device when receiving a projection operation of a user. If the first device finds a plurality of electronic devices, the first device may present a device list to the user, where the device list includes device identifiers of the plurality of electronic devices, and when receiving a determining operation of the user based on at least one device identifier of the plurality of electronic device identifiers, the first device determines an electronic device corresponding to the at least one device identifier as the second device.

In some embodiments, the first device may determine, based on the device identifier of the second device, the first user identifier from the stored correspondence between the at least one device identifier and the at least one user identifier. In some embodiments, the first device may provide a user list for the user, where the user list includes at least one user identifier, and when receiving a determining operation of the user based on any user identifier, the first device determines the user identifier as the first user identifier. In some embodiments, the first device may also receive the first user identifier submitted by the user.

Optionally, that the first device obtains first content to display corresponding to a first process includes:
The first device obtains third content to display corresponding to the first process of the first application program;
the first device obtains from an application program ontology of the first application program, display style data corresponding to the second device; and
the first device performs adaptation processing on the third content to display based on the display style data corresponding to the second device, to obtain the first content to display.

The first device may obtain, from the application program ontology of the first application program, the display style data corresponding to the second device, and does not need to preset display style data for various devices in advance. Therefore, costs of projection display are reduced.

Optionally, before a first device obtains first content to display corresponding to a first process of a first application program, the method further includes:
The first device creates the first process based on the first user identifier.

Optionally, that the first device creates the first process based on the first user identifier includes:
If the first device determines that a user corresponding to the first user identifier exists, the first device obtains user data of the first application program from a user space corresponding to the first user identifier; and
the first device creates the first process based on the user data of the first application program.

The first device may determine whether a stored user identifier list includes the first user identifier, and if the stored user identifier list includes the first user identifier, the first device may determine that the user corresponding to the first user identifier exists; otherwise, the first device may determine that the user corresponding to the first user identifier does not exist. In addition, if the user corresponding to the first user identifier does not exist, the first device may create the user based on the first user identifier, and then create the first process based on the first user identifier.

It should be noted that the first device may include a plurality of user spaces, and the plurality of user spaces are isolated from each other. The user space may include application data. In some embodiments, the application data may include user data, and the user data may be data generated by the first device for a user when the first device runs an application program, for example, a chat record of an instant messaging application or a picture taken by a camera. The application program ontology may be stored in an instruction storage space other than the plurality of user spaces, and the instruction storage space may be shared by users corresponding to the plurality of user spaces. Alternatively, in some embodiments, the application data may further include an application program ontology, and the first device may install, based on different user identifiers, an application program in user spaces corresponding to the user identifiers. User data of a same application program in different user spaces may be different, so that the first device may simultaneously and independently run a plurality of processes of the same application program. For example, an address of the instruction storage space used for installing an application program in the first device is "/data/app", the first device includes two user spaces, and addresses of the two user spaces are "/data/user/0" and "/data/user/10", where "/data/user/0" is a user space of a user 0, and "/data/user/10" is a user space of a user 10. Each user space includes user data of a communication application. Therefore, the first device may simultaneously and independently run two processes of the communication application. For a user, two communication applications may be run on the first device, and different application accounts may be logged in to in each communication application.

In some embodiments, the first device may create the second process of the application program based on the second user identifier in a manner similar to creating the first process based on the first user identifier.

Optionally, the first device includes a first mobile phone, and the second device includes a computer, a vehicle-mounted device, a smart television, or a second mobile phone. Certainly, in actual application, the second device may also include another electronic device on which a display is disposed.

According to a second aspect, an embodiment of this application provides a screen projection apparatus. The screen projection apparatus may be applied to an electronic device, and the screen projection apparatus may perform the method according to any one of the first aspect.

According to a third aspect, an embodiment of this application provides an electronic device, including a memory and a processor. The memory is configured to store a computer program; and the processor is configured to invoke the computer program to perform the method according to any one of the first aspect.

According to a fourth aspect, an embodiment of this application provides a chip system. The chip system includes a processor, the processor is coupled to a memory, and the processor executes a computer program stored in the memory, to implement the method according to any one of the first aspect.

The chip system may be a single chip or a chip module including a plurality of chips.

According to a fifth aspect, an embodiment of this application provides a computer-readable storage medium. The computer-readable storage medium stores a computer program, and when the computer program is executed by a processor, the method according to any one of the first aspect is implemented.

According to a sixth aspect, an embodiment of this application provides a computer program product. When the computer program product runs on an electronic device, the electronic device is enabled to perform the method according to any one of the first aspect.

It may be understood that, for beneficial effects of the second aspect to the sixth aspect, refer to related descriptions in the first aspect. Details are not described herein again.

### BRIEF DESCRIPTION OF DRAWINGS

FIG. 1 is a schematic diagram of a structure of an electronic device according to an embodiment of this application;
FIG. 2 is a schematic diagram of a structure of a screen projection system according to an embodiment of this application;
FIG. 3 is a schematic diagram of a screen projection scenario according to an embodiment of this application;
FIG. 4A and FIG. 4B are a schematic diagram of another screen projection scenario according to an embodiment of this application;
FIG. 5 is a schematic diagram of a structure of another screen projection system according to an embodiment of this application;
FIG. 6 is a schematic diagram of a software architecture of an application program according to an embodiment of this application;
FIG. 7 is a flowchart of a screen projection method according to an embodiment of this application;
FIG. 8 is a schematic diagram of another screen projection scenario according to an embodiment of this application;
FIG. 9 is a schematic diagram of another screen projection scenario according to an embodiment of this application; and
FIG. 10 is a schematic diagram of a structure of another electronic device according to an embodiment of this application.

### DESCRIPTION OF EMBODIMENTS

A screen projection method provided in embodiments of this application may be applied to an electronic device such as a mobile phone, a tablet computer, a wearable device, a vehicle-mounted device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

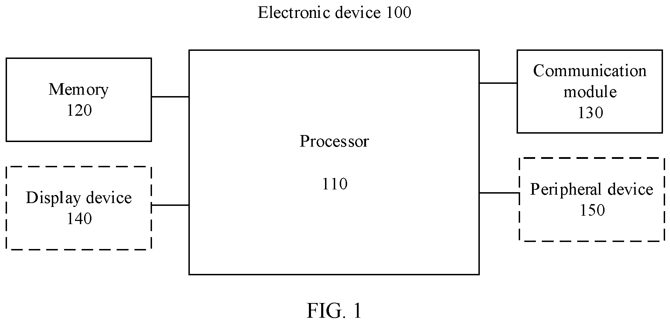

FIG. 1 is a schematic diagram of a structure of an electronic device 100 according to this application. The electronic device 100 may be a first device, a second device, a third device, a fourth device, or a fifth device in the following. The electronic device 100 may include a processor 110, a memory 120, a communication module 130, and the like.

The processor 110 may include one or more processing units, and the memory 120 is configured to store program code and data. In this embodiment of this application, the processor 110 may execute computer-executable instructions stored in the memory 120, and the processor 110 is configured to control and manage an action of the electronic device 100.

The communication module 130 may be configured to: perform communication between internal modules of the electronic device 100, or perform communication between the electronic device 100 and another external electronic device, or the like. For example, if the electronic device 100 communicates with another electronic device in a wired connection manner, the communication module 130 may include an interface, for example, a USB interface, where the USB interface may be an interface that complies with a USB standard specification, and may be specifically a mini USB interface, a micro USB interface, a USB Type C interface, or the like. The USB interface may be configured to connect to a charger to charge the electronic device 100, or may be configured to perform data transmission between the electronic device 100 and a peripheral device. Alternatively, the USB interface may be configured to connect to a headset for playing audio through the headset. The interface may be further configured to connect to another electronic device.

Alternatively, the communication module 130 may include an audio component, a radio frequency circuit, a Bluetooth chip, a wireless fidelity (wireless fidelity, Wi-Fi) chip, a near-field communication (near-field communication, NFC) module, and the like. The communication module 130 may perform interaction between the electronic device 100 and the another electronic device in a plurality of different manners.

Optionally, the electronic device 100 may further include a display device (display device) 140, and the display device 140 may display an image, a video, or the like in a human-computer interaction interface. Optionally, the display device 140 may include a physical display, a virtual display, a Wi-Fi display (Wi-Fi display), or the like.

Optionally, the electronic device 100 may further include a peripheral device 150, for example, a mouse, a keyboard, a loudspeaker, or a microphone.

It should be understood that, in addition to various components or modules shown in FIG. 1, the structure of the electronic device 100 is not specifically limited in this embodiment of this application. In some other embodiments of this application, the electronic device 100 may further include more or fewer components than those shown in the figure, some components may be combined, some components may be split, or different component arrangements may be used. The components shown in the figure may be implemented by hardware, software, or a combination of software and hardware.

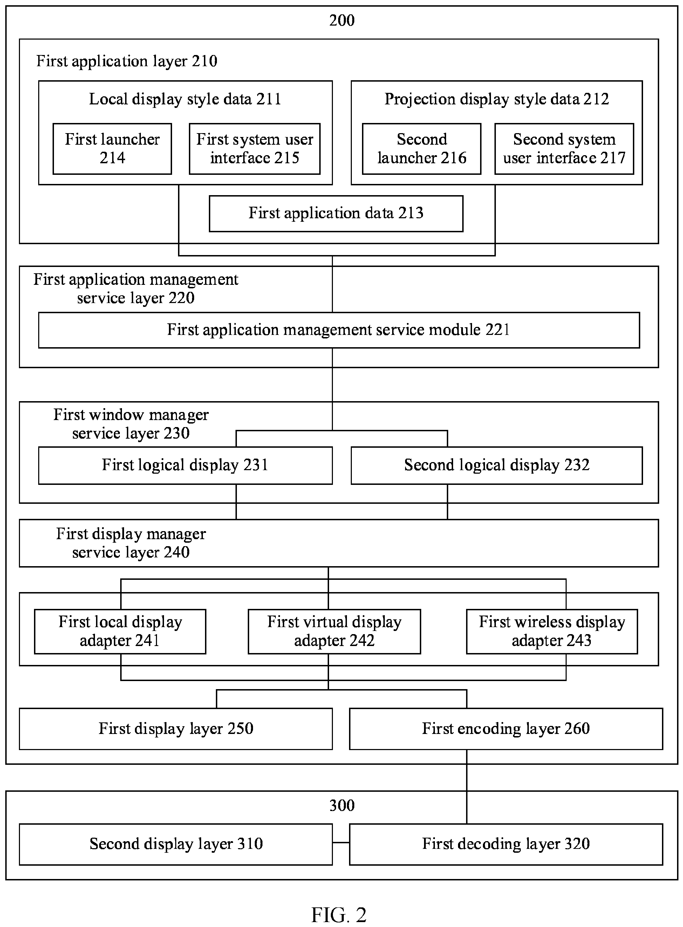

FIG. 2 is a schematic diagram of a structure of a screen projection system according to an embodiment of this application. The screen projection system may include a fourth device 200 and a fifth device 300.

The fourth device 200 may include a first application layer 210, a first application management service layer 220, a first window manager service (window manager service, WMS) layer 230, a first display manager service (display manager service, DMS) layer 240, a first display layer 250, and a first encoding layer 260.

The first application layer 210 may include local display style data 211, at least one piece of projection display style data 212, and first application data 213. The local display style data 211 and the projection display style data 212 may be preset by the fourth device 200 in advance based on physical features of a local display device of the fourth device 200 and a display device of the fifth device 300. In this way, same content to display may be normally displayed on the fourth device locally and on the fifth device 200, respectively, and different display styles are presented. The physical feature may include at least one of resolution and dots per inch (dots per inch, DPI). The local display style data 211 may include a first launcher (launcher) 214 and a first system user interface (system UI) 215. The projection display style data 212 may include a second launcher (which may be referred to as cast_launcher) 216 and a second system user interface (which may be referred to as a cast_system UI) 217. The first launcher 214 and the second launcher 216 may be a same application, or may be different applications, and are configured to provide different launcher styles for different devices, such as a landscape screen, a vertical screen, a screen size, and a screen ratio. The first system user interface 215 and the second system user interface 217 may be a same application, or may be different applications, and are configured to provide different UI styles for different devices, such as a status bar, a notification bar, a navigation bar, and a volume UI. The first application data 213 may include an application program ontology (like a camera, a gallery, an instant messaging application, and an audio and video application) of an application program (application) and user data (such as a document, a photo, music, a video, and a chat record) for the application program.

The first application management service layer 220 may include a first application management service module 221. The first application management service module 221 may be configured to manage a running status of an application. In some embodiments, the first application management service module 221 may manage a life cycle of a component such as an activity component of an application program by using an activity manager service (activity manager service, AMS), for example, starting, ending, and scheduling the activity component. The activity component is an important component of the application program, and all activity components of the application program may run in a process of the application program.

The first window management service layer 230 may include a first logical display (display content) 231 and a second logical display 232. The first logical display 231 and the second logical display 232 may be respectively corresponding to a local display device of the fourth device 200 and a display device of the fifth device 300. The first logical display 231 is used as an example. The first logical display 231 may determine, based on information included in a window and a subwindow of each activity component, content to display on the local display device of the fourth device 200.

The first display management service layer 240 may be configured to manage a life cycle of a display device (including the local display device of the fourth device 200 and the display device of the fifth device 300). The display adapter may be coupled to the first display management service layer 240. The display adapter may be configured to discover a display device and determine a physical feature of the display device, or may process displayed content based on the physical feature of the display device, so that the displayed content adapts to the physical feature. That is, the display adapter may provide an adaptation function for the display device. The first display management service layer 240 may provide a detected physical feature of a display device to another layer (like the first window management service layer 230), so that the another layer performs a display-related operation based on the physical feature. In some embodiments, the display adapter may include at least one of a local display adapter (local display adapter) 241, a virtual display adapter (overlay display adapter or virtual display adapter) 242, and a wireless display adapter (Wi-Fi display adapter) 243. The local display adapter 241 may be configured to provide an adaptation function for a physical display (or referred to as a primary display), the virtual display adapter 242 may be configured to provide an adaptation function for a virtual display, and the virtual display adapter 242 may be created by the fourth device 300 when the fourth device 300 detects a projection device (for example, the fifth device 300). The wireless display adapter may be configured to provide an adaptation function for a wireless display. In this embodiment of this application, the local display adapter 241 may provide an adaptation function for the local display device of the fourth device 200, and the wireless display adapter 243 may provide an adaptation function for the display device of the fifth device 300.

The first display layer 250 may synthesize and render, through an image synthesis service (for example, a surface flinger), data that corresponds to a display device and that needs to be displayed, and send obtained content to display (for example, an image) to the display device for display.

The first encoding layer 260 may be configured to encode content to display that is to be sent to the fifth device 300.

The fifth device 300 may include a second display layer 310 and a first decoding layer 320. The first decoding layer 320 may decode the content to display encoded by the first encoding layer 260, and send the decoded content to display to the second display layer 310. The second display layer 310 may perform steps similar to or the same as those of the first display layer 250, to display the content to display.

In some embodiments, the fourth device 200 may simultaneously display, through different source screen projection, one interface locally, and display another interface on another device of the fourth device 200. Specifically, for example, the fourth device 200 performs screen projection on the fifth device 300 in a different source screen projection mode. The fourth device 200 discovers the physical feature of the display device of the fifth device 300 through the first display management service layer 240, and searches locally based on the physical feature of the display device for the projection display style data 212 corresponding to the fifth device 300. The fourth device 200 separately displays one launcher locally by using the local display style data 211, and displays another launcher on the fifth device 300 by using the projection display style data 212. When an application program runs, the fourth device 200 may manage a process of the application program through the first application management service layer 220, and one application program is corresponding to one process. The fourth device 200 may further determine, through the first window management service layer 230, a display device on which content to display corresponding to the process is displayed. If the content to display corresponding to the process is displayed on the display device of the fifth device 300, the content to display is processed through the first wireless display adapter 243, so that the content to display is suitable for display on the display device of the fifth device 300. Then, the fourth device 200 may encode the adapted content to display through the first encoding layer 260, and send the encoded content to display to the fifth device 300. The fifth device 300 may decode the received content to display through the first decoding layer 320, and display the decoded content to display on the display device through the second display layer 310.

Different source screen projection is a screen projection mode. The different source screen projection mode means that an electronic device projects a part of content to display on another electronic device, and content to display on the another electronic device is different from content displayed locally on the electronic device. Another screen projection mode is same source screen projection, which means that one electronic device directly projects content displayed locally on the electronic device to another electronic device for display, that is, content displayed on the two electronic devices is the same.

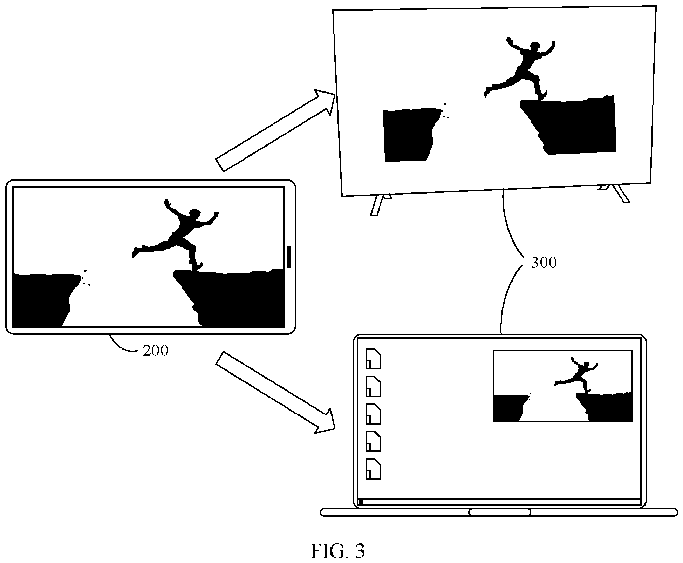

FIG. 3 is a schematic diagram of a scenario of same source screen projection display according to an embodiment of this application. In this scenario, the fourth device 200 is a mobile phone, and the fifth device 300 includes at least one of a smart television and a notebook computer. The mobile phone currently displays a video playback image, and the mobile phone projects the video playback image to the at least one of the smart television and the notebook computer, so that the at least one of the smart television and the notebook computer also displays the video playback image.

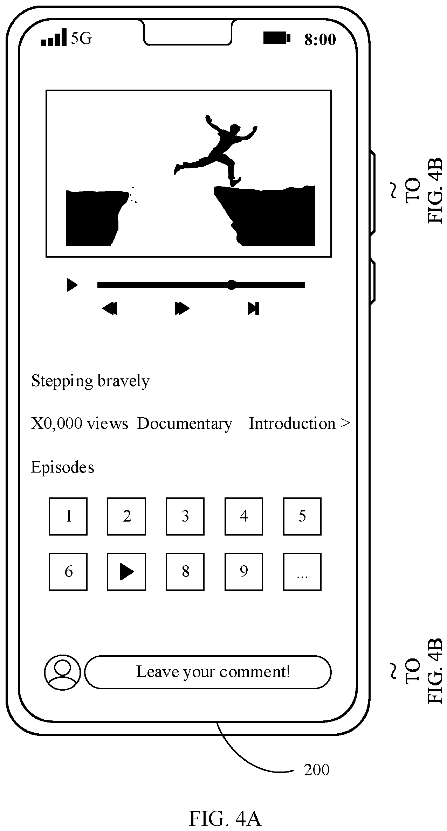

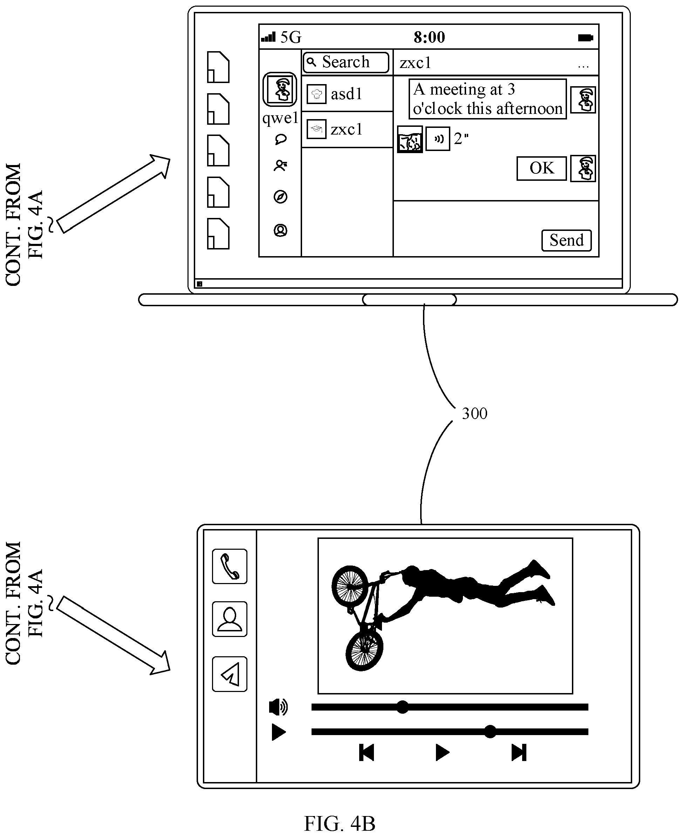

FIG. 4A and FIG. 4B are a schematic diagram of a scenario of different source screen projection display according to an embodiment of this application. In this scenario, the fourth device 200 is a mobile phone, and the fifth device 300 includes one of a laptop computer and a vehicle-mounted device. The mobile phone currently displays a video playback image, and the mobile phone also projects and displays a chat interface on the laptop computer. Similarly, the mobile phone may also project and display a music playback image on the vehicle-mounted device.

It can be learned that at least the following problems exist in the foregoing embodiment. First, because a same application program corresponds to one process, and one process corresponds to one user, the fourth device 200 may content to display of the process on the display device of the fourth device 200 or the fifth device 300. In other words, content displayed by the fourth device 200 through screen projection is the same as that displayed locally. However, because a user of the first device and a user watching a display device of the second device may be different, for example, the first device may be a mobile phone of a user, and the second device may be a public display device in a conference room of a company, the user of the first device may not want the user watching the second device to view some private content through the second device. As a result, user privacy may be leaked, and security is low. Second, because display devices of different devices have different physical features (such as resolution and DPI), different display styles are required. It is difficult for the fourth device 200 to adapt content to display of a same process to different display devices at the same time, when different source screen projection is performed, it is difficult for the fourth device 200 and the fifth device 300 to simultaneously display a same application program. In addition, when content to display of the application program is switched from the fourth device 200 to the fifth device 300 or switched from the fifth device 300 to the fourth device 200 for display, the application program may be reloaded. As a result, display performance and user experience are poor. In addition, the fourth device 200 needs to set different projection display style data for different electronic devices in advance. Therefore, costs of projection are increased.

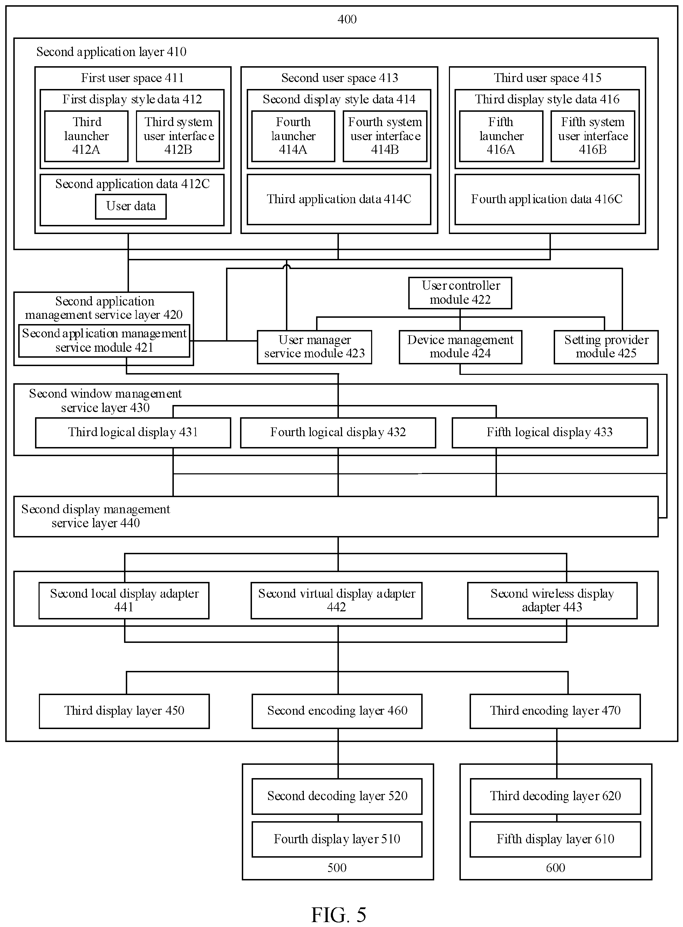

To resolve at least some of the foregoing technical problems, an embodiment of this application provides another screen projection system. FIG. 5 is a schematic diagram of a structure of the another screen projection system according to an embodiment of this application. The screen projection system may include a first device 400 and at least one projection device (FIG. 5 shows a second device 500 and a third device 600), and a display may be disposed in the projection device.

The first device 400 may include a second application layer 410, a second application management service layer 420, a user controller (user controller) module 422, a user manager service (user manager service) module 423, a device management module 424, a setting provider (setting provider) module 425, a second window management service layer 430, a second display management service layer 440, a third display layer 450, and an encoding layer (FIG. 5 shows a second encoding layer 460 and a third encoding layer 470).

The second application layer 410 may include a plurality of user spaces, and each user space may include application data and display style data. Each user space may correspond to one user. FIG. 5 shows a first user space 411, a second user space 413, and a third user space 415. A user identifier (userid) corresponding to the first user space 411 is 0 (that is, userid = 0), and the first user space 411 includes second application data 412C. A user identifier corresponding to the second user space 413 is 10 (that is, userid = 10), and the second user space 413 includes third application data 414C. A user identifier corresponding to the third user space 415 is 11 (userid = 11), and the first user space 415 includes fourth application data 416C. Each application data may be similar to the first application data 213 in FIG. 2. Each piece of display style data may be similar to the local display style data 211 or the projection display style data 212 of the fourth device 200 in FIG. 2, and each piece of display style data may correspond to one projection display device. FIG. 5 shows first display style data 412, second display style data 414, and third display style data 416. The first display style data 412 corresponds to the first device 400, and the first display style data 412 includes a third launcher 412A and a third system user interface 412B. The second display style data 414 corresponds to the second device 500, and the second display style data 414 includes a fourth launcher 414A and a fourth system user interface 414B. The third display style data 416 corresponds to the third device 600, and the third display style data 416 includes a fifth launcher 416A and a fifth system user interface 416B. Each user space may correspond to one user. Therefore, when running an application program, the first device 400 may run a plurality of processes to correspond to a plurality of users. Correspondingly, during projection display, content to display corresponding to different processes (that is, different users) may be displayed on display devices of different devices.

It should be noted that the user identifier in this embodiment of this application may be a user identifier in an operating system of the electronic device. For example, userid = 0 may represent a primary user (that is, a user 0) in the operating system, and userid = 10 and userid = 11 may represent sub-users (that is, a user 10 and a user 11) in the operating system.

It should be further noted that the first device 400 may include a plurality of user spaces, and the user spaces are isolated from each other. The user space may include application data. In some embodiment, the application data may include user data (as shown by the second application data 412C in FIG. 5), and the user data may be data generated by the first device 400 for a user when the first device 400 runs an application program, for example, a chat record of an instant messaging application or a picture taken by a camera. In some embodiments, the application data may further include an application program ontology, and the first device may install, based on different user identifiers, an application program in user spaces corresponding to the user identifiers. Alternatively, in some other embodiments, the application data does not include an application program ontology, the application program ontology is stored in an instruction storage space other than the plurality of user spaces, and the instruction storage space may be shared by users corresponding to the plurality of user spaces. User data of a same application program in different user spaces may be different, so that the first device 400 may simultaneously and independently run a plurality of processes of the same application program. For example, an address of the instruction storage space used for installing an application program in the first device 400 is "/data/app", the first device includes two user spaces, and addresses of the two user spaces are "/data/user/0" and "/data/user/10", where "/data/user/0" is a user space of a user 0, and "/data/user/10" is a user space of a user 10. Each user space includes user data of a communication application. Therefore, the first device 400 may simultaneously and independently run two processes of the communication application. For a user, two communication applications may be run on the first device 400, and different application accounts may be logged in to in each communication application.

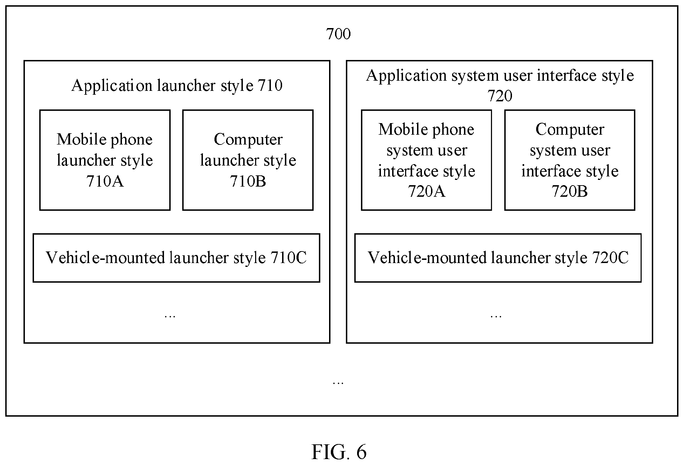

In some embodiments, each user space may not include display style data. Instead, as shown in FIG. 6, an application program ontology 700 may include a plurality of types of display style data such as an application launcher style 710 and an application system user interface style 720, and each piece of display style data may include a style adapted for different devices. As shown in FIG. 6, the application launcher style 710 includes a mobile phone launcher style 710A, a computer launcher style 710B, and a vehicle-mounted launcher style 710C, so that a launcher of the application program 700 can be normally displayed on display devices of a mobile phone, a computer, and a vehicle-mounted device. Similarly, the application system user interface style 720 may include a mobile phone system user interface style 720A, a computer system user interface style 720B, and a vehicle-mounted launcher style 720C, so that a system user interface of the application program 700 can be normally displayed on display devices of a mobile phone, a computer, and a vehicle-mounted device. That is, the first device 400 may no longer preset different display style data for different devices, but may obtain display styles for different devices from application programs. Therefore, display costs are reduced.

The user controller module 422 may be configured to configure a user or a device, including responding to a related operation of the user, to store a correspondence between a user identifier and a device identifier in the setting provider module 425, that is, bind the user identifier and the device identifier.

The user manager service module 423 may be configured to manage a user, for example, including login, logout, change of a user identifier, and the like.

The device management module 424 may be configured to manage an electronic device on which screen projection is performed. For example, the device management module 424 may obtain a device identifier, delete a device identifier, and the like.

The setting provider module 425 may be configured to store a correspondence between a user identifier and a device identifier. Certainly, in actual application, the setting provider module 425 may further store other information related to a user or a device.

The second application management service layer 420 may include a second application management service module 421, and the second application management service module 421 may be similar to the first application management service module 221 in FIG. 2. In some embodiments, the second application management service module 421 may be configured to search the setting provider module 425 for a user identifier corresponding to a device identifier or an electronic device identifier corresponding to a user identifier.

The second window management service layer 430 may include a plurality of logical displays, each logical display may correspond to one real or virtual display, and each logical display may be similar to the first logical display 231 or the second logical display 232 in FIG. 2. For example, in FIG. 3, the second window management service layer 430 includes a third logical display 431, a fourth logical display 432, and a fifth logical display 433. The third logical display 431 corresponds to a local display device of the first device 400, the fourth logical display 432 may correspond to a display device of the second device 500, and the fifth logical display 433 may correspond to a display device of the third device 600.

The second display management service layer 440 may be similar to the first display management service layer 240 in FIG. 2.

A second local display adapter 441 may be similar to the first local display adapter 241, a second virtual display adapter 442 may be similar to the first virtual display adapter 242, and a second wireless display adapter 443 may be similar to the first wireless display adapter 243.

The third display layer 450, a fourth display layer 510, and a fifth display layer 610 in the third device 600 may be similar to the first display layer 241 in FIG. 2.

The second encoding layer 460 and the third encoding layer 470 may be similar to the first encoding layer 260 in FIG. 2.

A second decoding layer 520 and a third decoding layer 620 may be similar to the first decoding layer 320 in FIG. 2.

In some embodiments, the first device 400 may include a first mobile phone, and the second device 500 or the third device 600 may include a second mobile phone, a computer, a vehicle-mounted device, or a smart television.

In this embodiment of this application, the first device may obtain first content to display corresponding to a first process of a first application program, and determine a second device based on a first user identifier corresponding to the first process. Because the first process is corresponding to the first user identifier, and the second device is determined based on the first user identifier, the first content to display of the first process may be projected to the second device for display, that is, the first device can use the first user identifier to control content displayed on the second device. This resolves a problem of projecting all displayed content of the first application program to the second device without distinction, and improves display security.

Specific embodiments are used below to describe in detail the technical solutions of this application. The following several specific embodiments may be combined with each other, and a same or similar concept or process may not be described repeatedly in some embodiments.

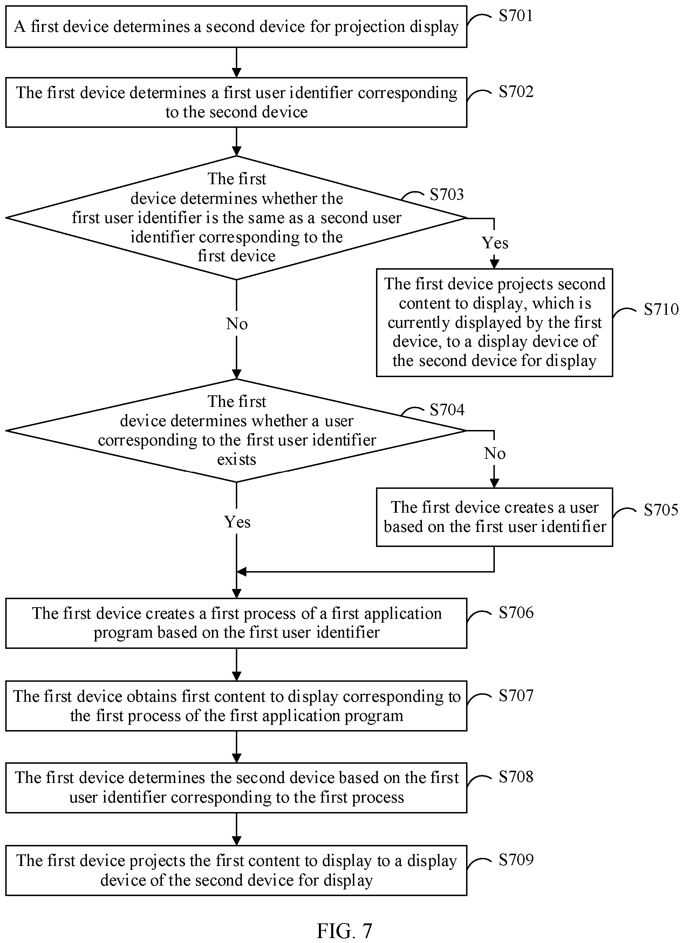

FIG. 7 is a flowchart of a screen projection method according to an embodiment of this application. It should be noted that the method is not limited to the specific sequence described in FIG. 7 and the following. It should be understood that in other embodiments, sequences of some steps in the method may be exchanged according to an actual requirement, or some steps in the method may be omitted or deleted. The method includes the following steps.

S701: A first device determines a second device for projection display.

The first device may establish a communication connection to the second device in a wireless or wired manner, to use the second device as another device for projection display.

In some embodiments, the first device may search for the second device when receiving a projection operation of a user. If the first device finds a plurality of electronic devices, the first device may present a device list to the user, where the device list includes device identifiers of the plurality of electronic devices, and when receiving a determining operation of the user based on at least one device identifier of the plurality of electronic device identifiers, the first device determines an electronic device corresponding to the at least one device identifier as the second device.

Certainly, in actual application, the first device may alternatively determine the second device in another manner. A manner in which the first device determines the second device for projection display is not specifically limited in this embodiment of this application.

In some embodiments, if the first device determines the second device, the first device may obtain a physical feature of a display device of the second device through a second display management service layer, so that screen projection display may be subsequently performed on the second device.

S702: The first device determines a first user identifier corresponding to the second device.

In some embodiments, the first device may determine, based on a device identifier of the second device, the first user identifier from a stored correspondence between at least one device identifier and at least one user identifier. In some embodiments, the first device may provide a user list for the user, where the user list includes at least one user identifier, and when receiving a determining operation of the user based on any user identifier, the first device determines the user identifier as the first user identifier. In some embodiments, the first device may also receive the first user identifier submitted by the user.

The first device may obtain, from a setting provider module in the first device through a second application management service layer, the first user identifier corresponding to the second device.

Certainly, in actual application, the first device may also determine, in another manner, the first user identifier corresponding to the second device. A manner in which the first device determines the first user identifier corresponding to the second device is not specifically limited in this embodiment of this application.

It should be noted that, in actual application, an execution sequence of S701 and S702 may not be limited, that is, the first device may determine the second device and the first user identifier in sequence, or may determine both the second device and the first user identifier at the same time.

S703: The first device determines whether the first user identifier is the same as a second user identifier corresponding to the first device. If the first user identifier and the second user identifier corresponding to the first device are different, it is determined that different source screen projection is performed, and S704 is performed. If the first user identifier and the second user identifier corresponding to the first device are the same, it is determined that same source screen projection is performed, and S710 is performed.

It can be learned from the foregoing description that different users have different user data, and content to display obtained by the first device when running application programs in different user data is different. Therefore, the first device may compare the first user identifier with the second user identifier. If the second user identifier corresponding to the first device is the same as the first user identifier corresponding to the second device, the user may need to synchronously display same content to display on display devices of the first device and the second device. Therefore, same source screen projection may be performed. If the second user identifier corresponding to the first device is different from the first user identifier corresponding to the second device, the user may need to separately display different content to display on display devices of different devices. Therefore, different source screen projection may be performed.

S704: The first device determines whether a user corresponding to the first user identifier exists. If the user corresponding to the first user identifier does not exist, S505 is performed; if the user corresponding to the first user identifier exists, S706 is performed.

It can be learned from the foregoing description that the first user identifier may not be obtained by the first device from a stored user list, for example, may be obtained by receiving, by the first device, a user submission after screen projection starts. Therefore, the first device may determine whether the first user identifier exists in the user list. If the first user identifier exists in the user list, it may be determined that the user corresponding to the first user identifier is an existing user; otherwise, if the first user identifier does not exist in the user list, it may be determined that the user corresponding to the first user identifier does not exist.

In some embodiments, if it is determined that the user corresponding to the first user identifier does not exist, the first device may not perform S705, but the first device may notify the user to resubmit a user identifier.

S705: The first device creates a user based on the first user identifier.

The first device may store the first user identifier in the user list, or may store the first user identifier and the device identifier of the second device in a correspondence between a user identifier and a device identifier.

In some embodiments, the first device may create a user space corresponding to the first user identifier.

The first device may create a user through a user manager service module, and bind the created user to the second device through a user controller module, that is, correspondingly store the first user identifier and the device identifier of the second device in a setting provider module.

In some embodiments, S704 and S705 may be omitted. In other words, the first device may directly perform S706 when determining that the second device corresponds to the first user identifier.

In some embodiments, the first device may first perform S704 to determine whether the user corresponding to the first user identifier exists. If the user corresponding to the first user identifier exists, S703 is performed to determine whether the first user identifier is the same as the second user identifier corresponding to the first device. If the user corresponding to the first user identifier does not exist, S705 is performed to create a user based on the first user identifier, and then S703 is performed.

In the foregoing steps, the first device determines the second device and the first user identifier corresponding to the second device, and the first device also determines the second user identifier corresponding to the first device, that is, the first device may determine different user identifiers and electronic devices corresponding to the different user identifiers. Then, in a subsequent step, the first device may determine a user identifier corresponding to a piece of content to display, and further determine a display device of an electronic device on which the content to display is displayed.

S706: The first device creates a first process of a first application program based on the first user identifier.

The first application program may be any application program. In some embodiments, the first application program may include a system application program. The system application program is used to provide a software environment that is necessary for an electronic device to run or interact with a user. For example, the first application program may include at least one of a launcher application and a system user interface application. In some other embodiments, the first application program may include a user application program, and the user application program may be installed by a user and provide a value-added service such as a communication application and a game, for the user. The first device may manage each application program according to a preset application management policy, for example, create or close the first application program.

In some embodiments, the first device may obtain user data of the first application program from a user space corresponding to the first user identifier, and create the first process based on the user data of the first application program. The first device may obtain an application program ontology of the application program from an instruction storage space or the user space corresponding to the first user identifier, obtain the user data of the first application program from the user space corresponding to the first user identifier, and then create the first process based on the obtained application program ontology and the obtained user data.

In some embodiments, the first device may store a process identifier of the first process and the first user identifier into a correspondence between the process identifier and the user identifier.

In some embodiments, the first device may alternatively create a second process of the first application program based on a second user identifier in a second manner similar to a manner of creating the first process, where the second user identifier may correspond to the first device.

For example, the first device may create a process 1 and a process 2 for an application A, where the process 1 corresponds to a user 1, and the process 2 corresponds to a user 10. For the user, the first device runs two same applications A, and may log in to different application accounts in each application A.

S707: The first device obtains first content to display corresponding to the first process of the first application program.

The first device may obtain, through a second window management service layer, the first content to display from a window and a subwindow that are corresponding to each activity component and that are included in the first process. In some embodiments, the first device may obtain third content to display in windows and subwindows, and then combine and render a plurality of pieces of obtained third content based on locations and sizes of these windows and subwindows, to obtain the first content to display.

It should be noted that, in actual application, the first device may alternatively obtain, in another manner, the first content to display corresponding to the first process. A manner in which the first device obtains the first content to display corresponding to the first process of the first application program is not specifically limited in this embodiment of this application.

In some embodiments, the first device may obtain, in a manner similar to that in S707, second content to display corresponding to the second process of the first application program.

S708: The first device determines the second device based on the first user identifier corresponding to the first process.

When running the first application program, the first device may run different processes based on different user identifiers. If there are a plurality of user identifiers, a plurality of processes may be run, and different user identifiers are also corresponding to different devices. Therefore, to determine whether to display the first content to display of the first application program locally or perform screen projection display, prevent a problem of user privacy leakage caused by projecting the content to display of the first application program to an external device without distinction, and improve display security, the first device may determine the device identifier of the second device based on the first user identifier corresponding to the first process, and determine the second device based on the device identifier of the second device.

In some embodiments, the first device may obtain, from a stored correspondence between at least one user identifier and at least one device identifier, an electronic device corresponding to an electronic device identifier corresponding to the first user identifier, and determine a device corresponding to the device identifier as the second device. The at least one user identifier may include the first user identifier, and the at least one device identifier may include the device identifier of the second device.

It should be noted that a sequence in which the first device obtains the first content to display corresponding to the first process and the first device determines the second device based on the first user identifier corresponding to the first process is not specifically limited in this embodiment of this application. For example, in some embodiments, the first device may first determine the second device based on the first user identifier, and then obtain the first content to display corresponding to the first process.

In some embodiments, the first device may obtain third content to display corresponding to the first process of the first application program, obtain display style data corresponding to the second device from the application program ontology (or user data) of the first application program, and perform adaptation processing on the third content to display based on the display style data corresponding to the second device, to obtain the first content to display. In other words, the first device may no longer need to set different projection display style data for different electronic devices in advance. Therefore, costs of projection are reduced.

The first device may obtain a physical feature of a display device of the second device through the second display management service layer, then obtain, based on the physical feature, display style data corresponding to the second device, and perform adaptation processing on the third content to display based on the display style data corresponding to the second device, to obtain the first content to display. Certainly, in actual application, the first device may also obtain, in another manner, the display style data corresponding to the second device. For example, the first device may also obtain, based on the device identifier of the second device, the display style data corresponding to the second device.

In some embodiments, the first device may determine, in a manner similar to S708, based on the second user identifier corresponding to the second process, an electronic device corresponding to the second user identifier. In addition, in some embodiments, the electronic device corresponding to the second user identifier may be the first device.

S709: The first device projects the first content to display to the display device of the second device for display.

Because the first content to display is corresponding to the first process of the first application program, and the second device is determined based on the first user identifier corresponding to the first process, when the first device runs the first application program, if determining that the first process is corresponding to the first user identifier, the first device may project the first content to display corresponding to the first process to the second device determined based on the first user identifier for display, that is, the first device may control, through the first user identifier, content to be projected and displayed on the second device. This reduces a problem of projecting all content to display of the first application program to the second device without distinction, and improves display security.

The first device may encode the first content to display through a second encoding layer, and send the encoded first content to display to the second device. The second device decodes the received data through a second decoding layer to obtain the first content to display, and then controls a display to display the first content to display through a fourth display layer.

S710: The first device projects second content to display, which is currently displayed by the first device, to the display device of the second device for display.

When the first user identifier is the same as the second user identifier, current screen projection may be same source screen projection, and the first process and the second process are a same process. In this case, the first device may project the second content to display, which is currently displayed by the first device, to the display device of the second device for display.

In some embodiments, the first device may display the second content to display locally on the first device. Certainly, if the second user identifier is not corresponding to the first device, but corresponding to another third device, the first device may project the second content to display to the third device for display in a manner similar to S708. In other words, the user may control, through a plurality of user identifiers, content to display on a plurality of different devices. Therefore, display flexibility and security are improved. In addition, when running the first application program, the first device displays the first content to display corresponding to the first process of the first application program on the second device, and displays the second content to display corresponding to the second process of the first application program on the first device or the third device. The first process and the second process are independent of each other. In this case, the first device may adapt the first content to display and the second content to display to display devices of the second device and the first device (or the third device), so that the first content to display and the second content to display are respectively displayed in the second device and the first device (or the third device). For a user, the first application program can be simultaneously displayed in two devices. Therefore, display performance and user experience are improved.

In some embodiments, the first device may not adapt a style of the first content to display based on the physical feature of the display device of the second device, so that the first device and the second device display the first application program in a consistent style.

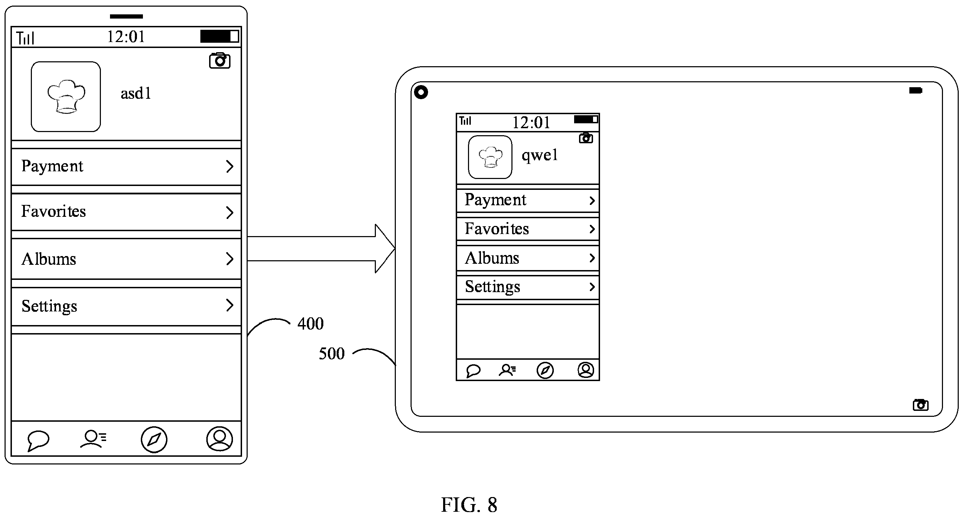

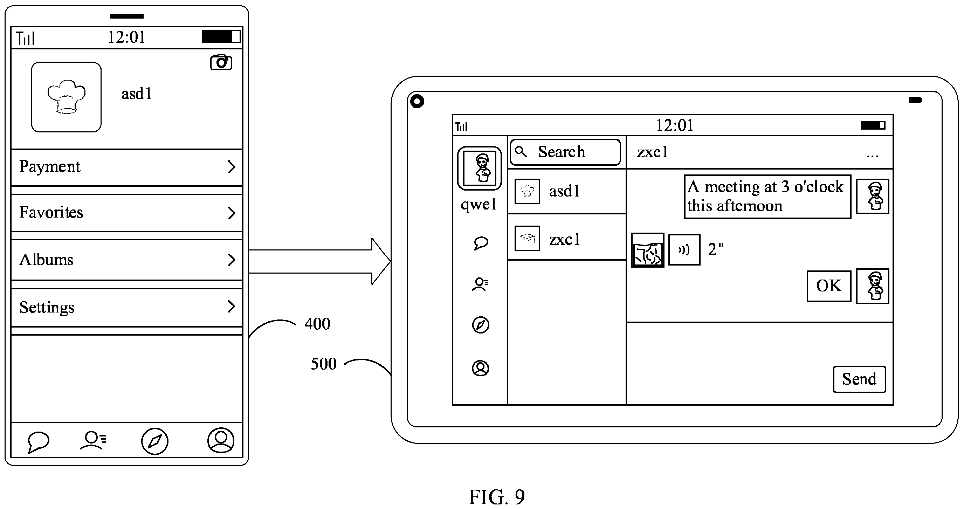

For example, refer to FIG. 8. The first device 400 is a mobile phone, and the second device 500 is a computer. The mobile phone currently displays a communication application, content to display of the communication application is a user settings interface 1, the content to display comes from a process 1 of the communication application, and the process 1 corresponds to a user 0. The mobile phone further projects another piece of content to display of the communication application to a display device of the computer for display. The another piece of content to display is a user settings interface 2, the another piece of content to display comes from a process 2 of the communication application, and the process 2 corresponds to a user 10. An application account for logging in to the communication application in the mobile phone is asd1, an application account for logging in to the communication application in a laptop is qwe1, and a style of a display interface of the mobile phone is consistent with a style of a display interface that is of the laptop and that is projected by the mobile phone on the laptop. Refer to FIG. 9. Content displayed on the mobile phone in FIG. 9 is the same as that displayed on the mobile phone in FIG. 8. A user taps a chat icon in the lower left corner based on the user settings interface displayed on the laptop. Therefore, the mobile phone switches to a chat interface, generates content to display 1 based on the chat interface, obtains display style data corresponding to the laptop from an application program ontology in the communication application based on a device identifier of the laptop, and performs adaptation processing on the content to display 1 based on the display style data to obtain content to display 2. Then, the mobile phone projects the content to display 2 to the laptop, so that the chat interface may be displayed on a display device of the laptop. In addition, a size of the chat interface matches a screen size of the display device of the laptop. This facilitates interaction between the laptop and the user.

It should be noted that a developer of each application program may generate display style data corresponding to a plurality of devices in advance, and encapsulate the display style data of the plurality of devices into an application program ontology or user data of the application program.

In this embodiment of this application, the first device may obtain first content to display corresponding to a first process of a first application program, and determine a second device based on a first user identifier corresponding to the first process. Because the first process is corresponding to the first user identifier, and the second device is determined based on the first user identifier, the first content to display of the first process may be projected to the second device for display, that is, the first device can use the first user identifier to control content displayed on the second device. This resolves a problem of projecting all displayed content of the first application program to the second device without distinction, and improves display security.

A person skilled in the art may clearly understand that, for the purpose of convenient and brief description, division of the foregoing functional units and modules is merely used as an example for description. In actual application, the foregoing functions may be allocated to different functional units and modules for implementation based on a requirement. In other words, an inner structure of the apparatus is divided into different functional units or modules, to implement all or some of the functions described above. Functional units and modules in embodiments may be integrated into one processing unit, each of the units may exist alone physically, or two or more units may be integrated into one unit. The integrated unit may be implemented in a form of hardware, or may be implemented in a form of a software functional unit. In addition, specific names of the functional units and modules are merely for ease of distinguishing between the functional units and modules, but are not intended to limit the protection scope of this application. For a specific working process of the units or modules in the foregoing system, refer to a corresponding process in the method embodiments. Details are not described herein again.

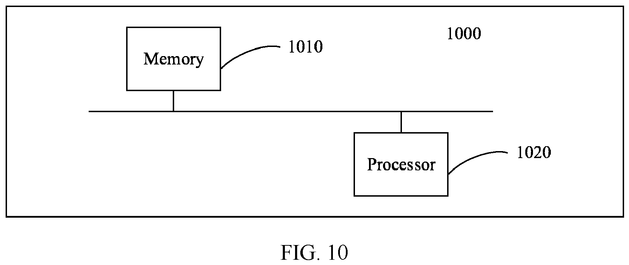

Based on a same inventive idea, an embodiment of this application further provides an electronic device. The electronic device may be the foregoing first device, the second device, or the third device. FIG. 10 is a schematic diagram of a structure of an electronic device 1000 according to an embodiment of this application. As shown in FIG. 10, the electronic device provided in this embodiment includes a memory 1010 and a processor 1020. The memory 1010 is configured to store a computer program. The processor 1020 is configured to invoke the computer program to perform the method described in the foregoing method embodiments.

The electronic device provided in this embodiment may perform the foregoing method embodiments. An implementation principle and technical effects of the electronic device are similar. Details are not described herein again.

Based on a same inventive idea, an embodiment of this application further provides a chip system. The chip system includes a processor, the processor is coupled to a memory, and the processor executes a computer program stored in the memory, to implement the method in the foregoing method embodiments.

The chip system may be a single chip or a chip module including a plurality of chips.

An embodiment of this application further provides a computer-readable storage medium. The computer-readable storage medium stores a computer program, and when the computer program is executed by a processor, the method in the foregoing method embodiments is implemented.

An embodiment of this application further provides a computer program product. When the computer program product runs on an electronic device, the terminal implements the method in the foregoing method embodiments when executed.

When the foregoing integrated unit is implemented in the form of a software functional unit and sold or used as an independent product, the integrated unit may be stored in a computer-readable storage medium. Based on such an understanding, all or some of the procedures of the method in embodiments of this application may be implemented by computer program instruction-related hardware. The computer program may be stored in a computer-readable storage medium. When the computer program is executed by the processor, steps of the foregoing method embodiments may be implemented. The computer program includes computer program code. The computer program code may be in a source code form, an object code form, an executable file form, some intermediate forms, or the like. The computer-readable storage medium may include at least: any entity or apparatus that can carry computer program code to a photographing apparatus/an electronic device, a recording medium, a computer memory, a read-only memory (read-only memory, ROM), a random access memory (random access memory, RAM), an electrical carrier signal, a telecommunication signal, and a software distribution medium, for example, a USB flash drive, a removable hard disk, a magnetic disk, or an optical disk. In some jurisdictions, the computer-readable medium cannot be an electrical carrier signal or a telecommunication signal according to legislation and patent practices.

In the foregoing embodiments, descriptions of the embodiments have respective focuses. For a part that is not described in detail in an embodiment, refer to related descriptions in another embodiment.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In embodiments provided in this application, it should be understood that the disclosed apparatus/ device and method may be implemented in other manners. For example, the described apparatus/device embodiment is merely an example. For example, division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

It should be understood that, when used in the specification and the appended claims of this application, the term "include" indicates presence of the described features, entireties, steps, operations, elements, and/or components, but does not exclude presence or addition of one or more other features, entireties, steps, operations, elements, components, and/or sets thereof.

It should also be understood that the term "and/or" used in the specification and the appended claims of this application refers to any combination and all possible combinations of one or more associated listed items, and includes these combinations.

As used in the specification and the appended claims of this application, according to the context, the term "if" may be interpreted as "when" or "once" or "in response to determining" or "in response to detecting". Likewise, the phrase "if it is determined that" or "if (a described condition or event) is detected" may be interpreted as a meaning of "once it is determined that" or "in response to determining" or "once (a described condition or event) is detected" or "in response to detecting (a described condition or event)" depending on the context.

In addition, in the descriptions of the specification and claims of this application, the terms "first", "second", "third", and the like are merely intended for a purpose of differentiated description, but shall not be understood as an indication or an implication of relative importance.

Reference to "an embodiment", "some embodiments", or the like described in the specification of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "comprise", "include", "have", and variants thereof all mean "include but are not limited to", unless otherwise specifically emphasized in another manner.

The foregoing embodiments are merely intended to describe the technical solutions of this application, but not to limit this application. Although this application is described in detail with reference to the foregoing embodiments, a person of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A screen projection method, comprising:
obtaining, by a first device, first content to display corresponding to a first process of a first application program;
determining, by the first device, a second device based on a first user identifier corresponding to the first process; and
projecting, by the first device, the first content to display to a display device of the second device for display.

2. The method according to claim 1, wherein the method further comprises:
obtaining, by the first device, second content to display corresponding to a second process of the first application program, wherein the second process corresponds to a second user identifier, and the second user identifier corresponds to the first device; and
displaying, by the first device, the second content to display on a display device of the first device.

3. The method according to claim 2, wherein the first user identifier is the same as the second user identifier, the first process and the second process are a same process, and the first content to display is the same as the second content to display.

4. The method according to any one of claims 1 to 3, wherein the determining, by the first device, a second device based on a first user identifier corresponding to the first process comprises:
determining, by the first device based on the first user identifier, a device identifier of the second device from a stored correspondence between at least one user identifier and at least one device identifier, wherein the at least one user identifier comprises the first user identifier, and the at least one device identifier comprises the device identifier of the second device; and
determining, by the first device, the second device based on the device identifier of the second device.

5. The method according to any one of claims 1 to 4, wherein the obtaining, by a first device, first content to display corresponding to a first process of a first application program comprises:
obtaining, by the first device, third content to display corresponding to the first process;
obtaining, by the first device from an application program ontology of the first application program, display style data corresponding to the second device; and
performing, by the first device, adaptation processing on the third content to display based on the display style data corresponding to the second device, to obtain the first content to display.

6. The method according to any one of claims 1 to 5, wherein before the obtaining, by a first device, first content to display corresponding to a first process of a first application program, the method further comprises:
creating, by the first device, the first process based on the first user identifier.

7. The method according to claim 6, wherein the creating, by the first device, the first process based on the first user identifier comprises:
if the first device determines that a user corresponding to the first user identifier exists, obtaining user data of the first application program from a user space corresponding to the first user identifier; and
creating the first process based on the user data of the first application program.

8. The method according to any one of claims 1 to 7, wherein the first device comprises a first mobile phone, and the second device comprises a computer, a vehicle-mounted device, a smart television, or a second mobile phone.

9. An electronic device, comprising a memory and a processor, wherein the memory is configured to store a computer program, and the processor is configured to invoke the computer program to perform the method according to any one of claims 1 to 8.

10. A computer-readable storage medium, wherein the computer-readable storage medium stores a computer program, and when the computer program is executed by a processor, the method according to any one of claims 1 to 8 is implemented.
